# EUROPÄISCHE PATENTSCHRIFT

(11) **EP 0 995 054 B1**
(45) Veröffentlichungstag und Bekanntmachung des Hinweises auf die Patenterteilung: **07.11.2001**
(21) Anmeldenummer: 98943698.5
(22) Anmeldetag: 15.07.1998
(51) Int. Cl.: F16G 13/16, B66C 13/12, F16L 3/015, H02G 11/00

(54) **FÜHRUNGSRINNENKONSTRUKTION**
GUIDE CHANNEL STRUCTURE
STRUCTURE DE CANAL DE GUIDAGE

(30) Priorität: 17.07.1997 DE 19730548
(43) Veröffentlichungstag der Anmeldung: 26.04.2000
(73) Patentinhaber: IGUS SPRITZGUSSTEILE FÜR DIE INDUSTRIE GmbH, D-51147 Köln (DE)
(72) Erfinder: BLASE, Günter, D-51429 Bergisch Gladbach (DE)
(74) Vertreter: Patentanwälte Lippert, Stachow, Schmidt & Partner
(86) Internationale Anmeldenummer: DE9801973
(87) Internationale Veröffentlichungsnummer: WO9904183

(56) Entgegenhaltungen:
- DE-B- 1 296 477
- DE-U- 29 706 670
- US-A- 3 994 373

## Beschreibung

Die Erfindung betrifft eine Führungsrinnenkonstruktion, die an einer Unterkonstruktion befestigbar ist, mit einer Führungsrinne aus langgestreckten parallelen Seitenteilen, zwischen denen ein Gegenstand ablegbar und verfahrbar ist, wie z.B. aus DE-U-297 06 670 bekannt ist.

Insbesondere werden derartige Führungsrinnenkonstruktionen zur Ablage und Führung von Energieführungsketten, die der Aufnahme von flexiblen Versorgungsleitungen für Elektrizität, Gase, Flüssigkeiten und dergleichen dienen und diese von einer stationären Quelle zu einem beweglichen Energieverbraucher führen, eingesetzt. Ihre Verwendung erfolgt insbesondere bei langen Verfahrwegen der Energieführungsketten, wie z. B. in der Fördertechnik, bei Krananlagen und anderen Maschinen, bei denen ein Energieverbraucher lange Wege zurücklegt.

Die zumindest in einer Richtung biegsamen Energieführungsketten werden während der Fahrbewegung des Verbrauchers über eine am beweglichen Energieverbraucher angeordnete Mitnehmereinrichtung einer Ab- oder Aufrollbewegung in den Führungsrinnen unterzogen. Dabei wird bei langen Verfahrwegen während der Aufrollbewegung der oben liegende Bereich der Energieführungskette, Obertrum genannt, auf dem in der Führungsrinne unten liegenden Bereich, Untertrum genannt, gleitend bewegt. Wird das feste Anschlußteil der Energieführungskette in der Mitte des Verfahrwegs in der Führungsrinne montiert, so gleitet das Obertrum auf der einen Hälfte des Verfahrwegs auf dem Untertrum. Um für die andere Hälfte des Verfahrwegs einen sich auf gleicher Höhe fortsetzenden reibungsarmen Lauf der Energieführungskette sicherzustellen, werden die Führungsrinnen in dem betreffenden Bereich mit einer Gleitvorrichtung versehen, die an den Innenwänden der Seitenteile angeordnet ist, so daß das Obertrum auf der Gleitvorrichtung bewegbar ist.

Anstelle von Energieführungsketten können auch flexible Energierohre auf der Gleitvorrichtung geführt werden.

Führungsrinnenkonstruktionen der eingangs genannten Art sind auch zur Ablage und zum Verfahren anderer Gegenstände, die einer gleitenden Führung mit seitlicher Begrenzung unterworfen werden, geeignet, wie z. B. Gleitschlitten, Transportgüter und -behälter.

Bisher bekannte Führungsrinnenkonstruktionen sind stationär an der Unterkonstruktion befestigt. Dazu ist die Führungsrinne entweder selbst oder durch Montagewinkel (DE 297 06 670 U1) an der Unterkonstruktion, z. B. einer Bodenplatte, festgelegt.

Es gibt jedoch Einsatzbereiche für Energieführungsketten und andere gleitend verfahrbare Gegenstände, bei denen eine Linearführung in einer Rinne erwünscht ist, die Rinne und deren Unterkonstruktion bereichsweise jedoch zu bestimmten Zwecken geöffnet und wieder geschlossen werden müssen. Dies ist z. B. bei Überbrückungen, auf denen ein Energieverbraucher verfahrbar ist und die zum Passieren eines dazu quer beweglichen Gegenstands zu öffnen sind, erforderlich. Insbesondere ist es bei Hafenkränen mit größeren Auslegern, an denen eine Laufkatze auf und ab fahrbar ist und die zum Passieren eines Schiffes hochgeschwenkt werden müssen, wünschenswert, die der Laufkatze zugeführten Versorgungsleitungen durch eine in einer Rinnenkonstruktion gleitende Energieführungskette zu führen. In diesem Fall besteht die Unterkonstruktion aus einem stationären Bereich und einem sich längs des Auslegers erstreckenden verschwenkbaren Bereich.

Es ist die Aufgabe der vorliegenden Erfindung, eine für gegeneinander verschwenkbare Bereiche der Unterkonstruktion geeignete Führungsrinnenkonstruktion zu schaffen.

Die Aufgabe wird erfindungsgemäß dadurch gelöst, daß die Führungsrinnenkonstruktion ein stationäres Konstruktionsteil zur Befestigung an einem stationären Bereich der Unterkonstruktion, ein bewegliches Konstruktionsteil zur Befestigung an einem um eine erste Drehachse gegenüber dem stationären Bereich verschwenkbaren Bereich der Unterkonstruktion und ein zwischen dem stationären Konstruktionsteil und dem beweglichen Konstruktionsteil angeordnetes Zwischen-Konstruktionsteil einschließt, das mit dem beweglichen Konstruktionsteil um eine zur ersten Drehachse parallele zweite Drehachse verschwenkbar verbunden ist, wobei das stationäre, das bewegliche und das Zwischen-Konstruktionsteil jeweils Rinnenstücke aufweisen, die im nicht-verschwenkten Zustand der Unterkonstruktion mit ihren Stirnseiten an den Innenseiten der Seitenteile fluchtend aneinanderliegen, die zweite Drehachse für das Zwischen-Konstruktionsteil an der in die Verschwenkrichtung weisenden Seite der Führungsrinne angeordnet ist und, in Abhängigkeit von der Lage der ersten Drehachse für den verschwenkbaren Bereich der Unterkonstruktion, die gegenüberliegenden Stirnseiten der Rinnenstücke des beweglichen Konstruktionsteils und des Zwischen-Konstruktionsteils so in der Verschwenkrichtung geneigt angeordnet sind und die Verschwenkbewegung des Zwischen-Konstruktionsteils mit der Bewegung des verschwenkbaren Bereichs der Unterkonstruktion und des beweglichen Konstruktionsteils durch eine Steuereinrichtung so gekoppelt ist, daß beim Verschwenken dieses Bereichs der Unterkonstruktion sich der bewegliche Konstruktionsteil und der Zwischen-Konstruktionsteil aneinander vorbei bewegen.

Vorzugsweise weist die Steuereinrichtung eine mechanische Kopplung auf. Dabei kann ohne einen eigenen Antrieb für die Verschwenkbewegung des Zwischen-Konstruktionsteils eine besonders einfache Kopplung dieses Konstruktionsteils mit der Bewegung des verschwenkbaren Bereichs der Unterkonstruktion bzw. des beweglichen Konstruktionsteils erreicht werden. Eine darüber hinausgehende Steuereinrichtung ist nicht erforderlich.

Es kommen jedoch auch andere Kopplungen in Betracht, bei denen z. B. ein elektrischer oder hydraulischer Antrieb des Zwischen-Konstruktionsteils in simultaner Abhängigkeit von der Bewegung oder dem Antrieb des verschwenkbaren Bereichs der Unterkonstruktion erfolgt. Diese Lösung schließt dafür geeignete steuerungstechnische Einrichtungen mit ein.

Bei einer üblichen Anwendung, z. B. bei Krananlagen, sind die erste Drehachse für den verschwenkbaren Bereich der Unterkonstruktion (z. B. den Ausleger) und die zweite Drehachse für das Zwischen-Konstruktionsteil horizontal zur Unterkonstruktion angeordnet. Der verschwenkbare Bereich der Unterkonstruktion (Ausleger) wird dann in vertikaler Richtung verschwenkt. Findet ein Verschwenken nach oben statt, so ist die zweite Drehachse an der Oberseite der Führungsrinne oder darüber angeordnet; wird nach unten verschwenkt, so ist die zweite Drehachse an der Unterseite der Führungsrinne oder darunter vorzusehen. Daneben kommt auch ein seitliches Verschwenken der Unterkonstruktion und Führungsrinne in Betracht, bei dem die zweite Drehachse an der einen bzw. anderen Seite der Führungsrinne oder außerhalb der Führungsrinne angeordnet ist.

Bei einer mechanischen Kopplung weist diese vorzugsweise einen am Zwischen-Konstruktionsteil angeordneten Hebelarm und ein mit dem beweglichen Konstruktionsteil gelenkig verbundenes und am Hebelarm gelenkig angreifendes Druckglied auf. Beim Verschwenken der Unterkonstruktion übt das daran befestigte bewegliche Konstruktionsteil über das Druckglied und den Hebelarm ein Drehmoment auf das Zwischen-Konstruktionsteil in der betreffenden Richtung aus. In Abhängigkeit von der Lage der ersten Drehachse bezüglich der Führungsrinnenkonstruktion ist das Zwischen-Konstruktionsteil in seiner Geometrie so zu bemessen und die gegenüberliegenden Stirnseiten der Rinnenstücke des beweglichen Konstruktionsteils und des Zwischen-Konstruktionsteils so in Längsrichtung geneigt anzuordnen, daß beim Verschwenken der Unterkonstruktion sich das bewegliche Konstruktionsteil und das Zwischen-Konstruktionsteil übereinander bewegen.

In einer vorteilhaften Weiterbildung der mechanischen Kopplung ist der Hebelarm im Bereich des dem beweglichen Konstruktionsteil gegenüberliegenden Endes des Zwischen-Konstruktionsteils angeordnet und ersteckt sich im wesentlichen senkrecht von diesem nach oben, wobei das Druckglied sich von einem an oder über der Oberseite des beweglichen Konstruktionsteils angeordneten Gelenkpunkt zu einem am freien Ende des Hebelarms angeordneten Gelenkpunkt erstreckt und seitlich außerhalb des Zwischen-Konstruktionsteils und des Hebelarms verläuft.

Besonders gute Kräfteverhältnisse werden dadurch erreicht, daß das Verhältnis zwischen der Höhe des Hebelarms und dem Abstand zwischen dem Gelenkpunkt des Druckglieds am beweglichen Konstruktionsteil und dem Fußpunkt des Hebelarms zwischen 0,3 und 0,45 liegt.

Zweckmäßigerweise weisen das stationäre, das bewegliche und das Zwischen-Konstruktionsteil einen die Kräfte zum Verschwenken des Zwischen-Konstruktionsteils aufnehmenden, selbsttragenden Rahmen für die darin angeordneten Rinnenstücke auf. Durch diesen Rahmen wirken die betreffenden Kräfte lediglich auf das Zwischen-Konstruktionsteil und das sich daran anschließende bewegliche bzw. stationäre Konstruktionssteil der Führungsrinnenkonstruktion. Die außerhalb dieser Teile verlaufende Führungsrinnenkonstruktion wird durch diese Kräfte nicht beansprucht.

In einer bevorzugten Weiterbildung ist der Rahmen an seinen beiden Enden an der Unterkonstruktion befestigt und bildet Schnittstellen mit der sich daran anschließenden am stationären bzw. verschwenkbaren Bereich der Unterkonstruktion weiterverlaufenden Führungsrinnenkonstruktion, die mit den beim Verschwenken des Zwischen-Konstruktionsteils auftretenden Kräften nicht beaufschlagt wird. Die über die zweite Drehachse und die Kopplung miteinander verbundenen stationären, beweglichen und Zwischen-Konstruktionsteile bilden somit eine selbständige Konstruktionseinheit, die an der betreffenden Stelle einer verschwenkbaren Unterkonstruktion zwischen gewöhnliche Führungsrinnenabschnitte zwischengeordnet werden kann. Die Konstruktionseinheit kann beim Hersteller komplett fertiggestellt und an Ort und Stelle an der Unterkonstruktion befestigt werden, ohne daß ein zusätzlicher Montageaufwand besteht.

Vorzugsweise ist an den gegenüberliegenden Stirnseiten des beweglichen Konstruktionsteils und des Zwischen-Konstruktionsteils eine Einrichtung zum genau fluchtenden Ausrichten der Enden der betreffenden Rinnenstücke vorgesehen. Mit dieser Einrichtung wird dafür Sorge getragen, daß auch nach einer Vielzahl von Bewegungsabläufen die Enden der Rinnenstücke genau aufeinander ausgerichtet sind, so daß insbesondere die Innenseiten der Führungsrinne an diesen Stellen keine Unregelmäßigkeiten aufweisen, die auf Dauer zu größerem Abrieb und zur Beschädigung der darin abgelegten und verfahrbaren Gegenstände führen könnten.

Diese Einrichtung kann z. B. eine seitlich an einem Konstruktionsteil in dessen Verschwenkrichtung ausgebildete und sich über diese Seite erstreckende Führungsnut und ein in diese, beim gegenseitigen Verfahren über im wesentlichen deren gesamte Länge eingreifendes, am anderen Konstruktionsteil angeordnetes Zentrierteil aufweisen. Dadurch, daß das Zentrierteil beim Verfahren des beweglichen und des Zwischen-Konstruktionsteils durchgehend in die sich über die gesamte betreffende Seite erstreckende Führungsnut eingreift, wird eine optimale Seitenstabilität gegenüber seitlichen Kräften, wie z. B. starken Winden oder sonstigen horizontalen Beanspruchungen, erreicht.

Darüber hinaus können an den gegenüberliegenden Enden des stationären, des beweglichen und des Zwischen-Konstruktionsteils seitliche Überlappungsteile zum Verschließen von Zwischenräumen zwischen den Konstruktionsteilen vorgesehen sein.

Schließlich kann an dem dem stationären Konstruktionsteil gegenüberliegenden Ende des Zwischen-Konstruktionsteils eine Verschlußklappe angeordnet sein, die bei auf geschwenktem Zwischen-Konstruktionsteil das Rinnenstück des stationären Konstruktionsteils verschließt. Beim Verschwenken der Unterkonstruktion und der daran gekoppelten Rinnenstücke wird dadurch ein Eindringen von Fremdkörpern in den Kanal der stationären Führungsrinne verhindert.

Ein Ausführungsbeispiel der Erfindung wird im folgenden anhand der Zeichnung näher beschrieben. Es zeigen:
- Fig. 1: eine Seitenansicht des Ausführungsbeispiels im geschlossenen Zustand,
- Fig. 2: die Seitenansicht gemäß Fig. 1 im geöffneten Zustand,
- Fig. 3: eine Ansicht der gegenüberliegenden Seite des Ausführungsbeispiels,
- Fig. 4: eine Seitenansicht gemäß Fig. 3 im geöffneten Zustand und
- Fig. 5: eine stirnseitige Ansicht in Richtung des Pfeils A in Fig. 2.

Bei dem im folgenden beschriebenen und in der Zeichnung dargestellten Ausführungsbeispiel handelt es sich um eine Führungsrinnenkonstruktion zur Ablage und zum Verfahren einer Energieführungskette 1.

Die Führungsrinnenkonstruktion umfaßt eine Führungsrinne 2 mit langgestreckten parallelen Seitenteilen 3 und 4, zwischen denen die Energieführungskette 1 auf Gleitschienen 5 ablegbar und verfahrbar ist.

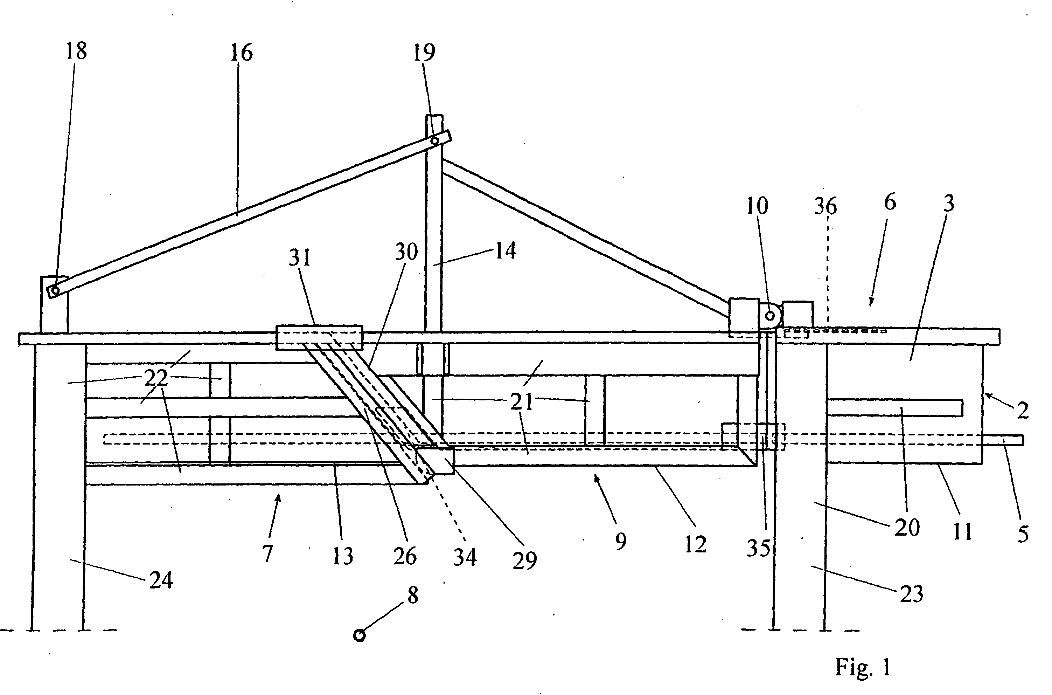

Wie z. B. aus Fig. 1 hervorgeht, besteht die Führungsrinnenkonstruktion aus einem stationären Konstruktionsteil 6 zur Befestigung an einen stationären Bereich einer (in der Zeichnung nicht dargestellten) Unterkonstruktion, z. B. einer Krananlage, einem beweglichen Konstruktionsteil 7 zur Befestigung an einem um eine erste Drehachse 8 gegenüber dem stationären Bereich verschwenkbaren Bereich der Unterkonstruktion und an einem zwischen dem stationären Konstruktionsteil 6 und dem beweglichen Konstruktionsteil 7 angeordnetem Zwischen-Konstruktionsteil 9, das mit dem beweglichen Konstruktionsteil 7 um eine zur ersten Drehachse 8 parallele zweite Drehachse 10 verschwenkbar verbunden ist. Das stationäre, das bewegliche und das Zwischen-Konstruktionsteil 6, 7 bzw. 9 weisen jeweils Rinnenstücke 11, 12 bzw. 13 auf, die in dem in Fig. 1 gezeigten nicht-verschwenkten Zustand der Unterkonstruktion mit ihren Stirnseiten an den Innenseiten der Seitenteile 3 und 4 deckungsgleich aneinanderliegen.

Bei einer Krananlage mit nach oben verschwenkbarem Ausleger, der den verschwenkbaren Bereich der Unterkonstruktion bildet, ist die erste Drehachse 8 horizontal angeordnet. Die zweite Drehachse 10 für das Zwischen-Konstruktionsteil 9 ist an der in die Verschwenkrichtung weisenden Seite der Führungsrinne, d. h., an der Oberseite der Führungsrinne, angeordnet.

Wie die Fig. 1 bis 4 im einzelnen zeigen, ist, in Abhängigkeit von der Lage der ersten Drehachse 8 der Unterkonstruktion bezüglich der Führungsrinnenkonstuktion, das Zwischen-Konstruktionsteil 9 so bemessen und sind die gegenüberliegenden Seiten der Rinnenstücke 13 und 12 des beweglichen Konstruktionsteils 7 und des Zwischen-Konstruktionsteils 9 so in Längsrichtung geneigt angeordnet, daß, aufgrund einer nachstehend beschriebenen mechanischen Kopplung zwischen diesen beiden Konstruktionsteilen 7 und 9, beim Verschwenken der Unterkonstruktion sich diese beiden Konstruktionsteile 7 und 9 übereinander bewegen.

Die mechanische Kopplung weist dazu beidseitig am Zwischen-Konstruktionsteil 9 angeordnete Hebelarme 14 und 15 sowie beidseitig mit dem beweglichen Konstruktionsteil 7 gelenkig verbundene und an den Hebelarmen 14 und 15 gelenkig angreifende Druckglieder 16 und 17 in Stabform auf. Die Hebelarme 14 und 15 sind im Bereich des dem beweglichen Konstruktionsteil 7 gegenüberliegenden Endes des Zwischen-Konstruktionsteils 9 angeordnet und erstrecken sich im wesentlichen senkrecht von diesem nach oben, wobei die Druckglieder 16 und 17 sich von einem an der Oberseite des beweglichen Konstruktionsteils 7 angeordneten Gelenkpunkt 18 zu einem am freien Ende der Hebelarme 14 und 15 angeordneten Gelenkpunkt 19 erstrecken und seitlich außerhalb des Zwischen-Konstruktionsteils 9 und der Hebelarme 14 und 15 verlaufen.

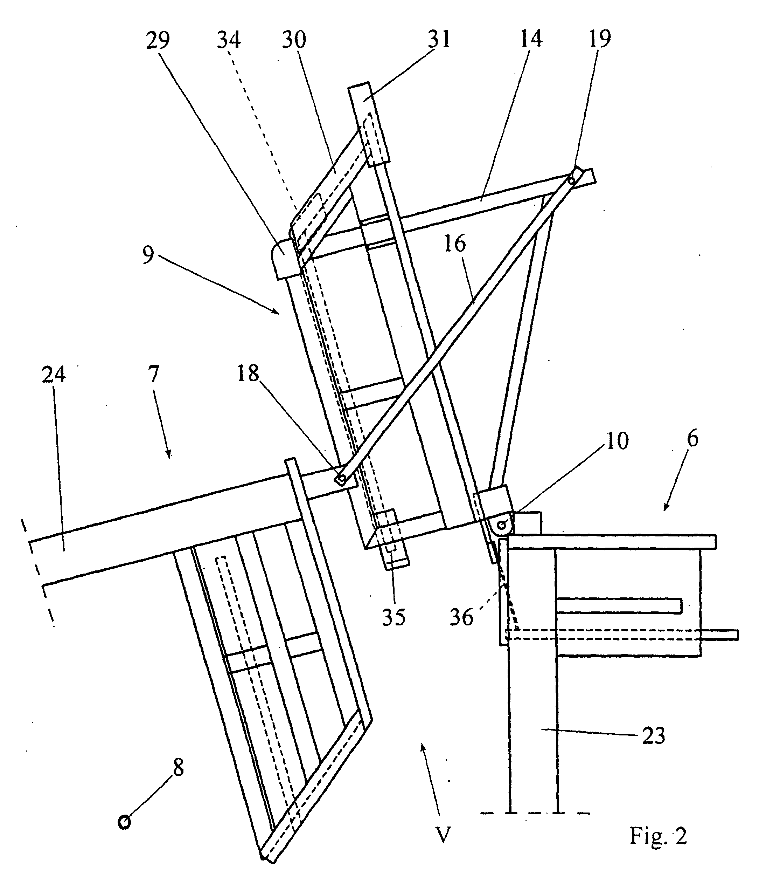

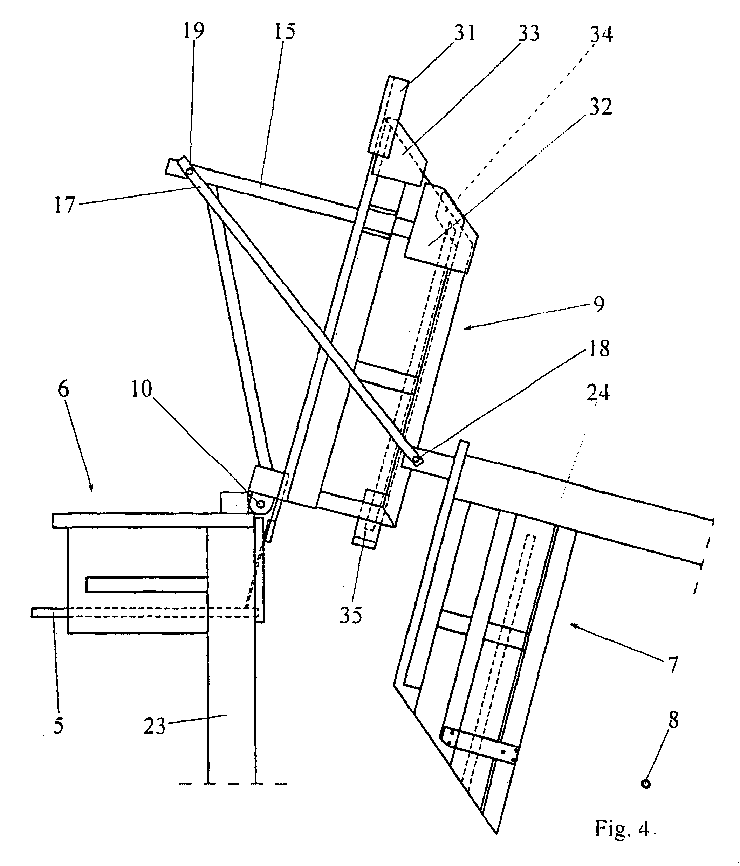

Beim Verschwenken der (in der Zeichnung nicht dargestellten) Unterkonstruktion um die erste Drehachse 8 übt das daran befestigte bewegliche Konstruktionsteil 7 über die Druckglieder 16 und 17 und die Hebelarme 14 und 15 ein Drehmoment auf das Zwischen-Konstruktionsteil 9 aus, das dadurch nach oben über das bewegliche Konstruktionsteil 7 geschwenkt wird, wie die Fig. 2 und 4 zeigen. Ein besonders günstiges Drehmoment wird dann erreicht, wenn das Verhältnis zwischen der Höhe des Hebelarms und dem Abstand zwischen dem Gelenkpunkt 18 und dem Fußpunkt des Hebelarms 14 bzw. 15 ca. 0,4 beträgt.

Die Konstruktionsteile 6, 7 und 9 der Führungsrinnenkonstruktion weisen jeweils einen die Kräfte zum Verschwenken des Zwischen-Konstruktionsteils 9 aufnehmenden selbsttragenden Rahmen 20, 21 bzw. 22 für die darin angeordneten Rinnenstücke 11, 12 bzw. 13 auf. Der Rahmen 20 für das stationäre Konstruktionsteil 6 ist über ein vertikal verlaufendes rohrförmiges Rahmenteil 23 mit dem stationären Bereich der (in der Zeichnung nicht dargestellten) Unterkonstruktion fest verbunden. Auf der anderen Seite ist der Rahmen 22 des beweglichen Konstruktionsteils 7 ebenfalls über ein vertikal verlaufendes rohrförmiges Rahmenteil 24 an dem verschwenkbaren Bereich der Unterkonstruktion befestigt. Die über die zweite Drehachse 10 und die mechanische Kopplung miteinander verbundenen Konstruktionsteile 6, 7 und 9 bilden somit eine selbständige Konstruktionseinheit, die beim Hersteller komplett fertiggestellt und an Ort und Stelle an der vorgegebenen Unterkonstruktion, z. B. einer Krananlage mit verschwenkbarem Ausleger, installiert werden kann.

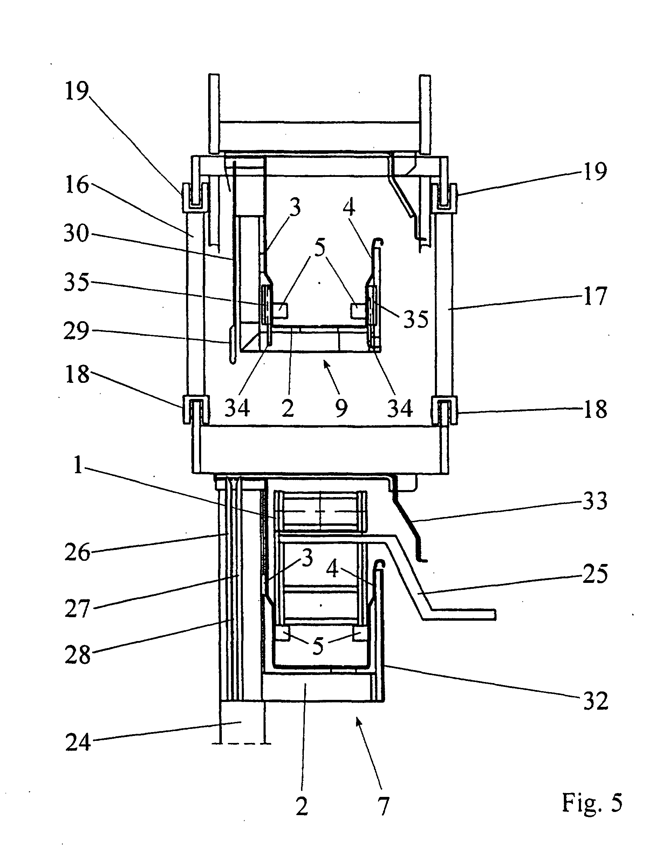

Wie insbesondere aus Fig. 5 in Verbindung mit Fig. 2 hervorgeht, sind die Rahmenteile 23 und 24 an der von einem am beweglichen Energieverbraucher befestigten Mitnehmer 25 der Energieführungskette 1 weg weisenden Seite der Führungsrinnenkonstruktion angeordnet.

Wie weiterhin aus den Zeichnungen hervorgeht, ist an den einander gegenüberliegenden Stirnseiten des beweglichen Konstruktionsteils 7 und des Zwischen-Konstruktionsteil 9 eine Einrichtung zum genau fluchtenden Ausrichten der Enden der betreffenden Rinnenstücke 12 und 13 vorgesehen.

Auf der vom Mitnehmer 25 der Energieführungskette 1 wegweisenden Seite der Führungsrinnenkonstruktion weist diese Einrichtung am beweglichen Konstruktionsteil 7 zwei Führungsleisten 26 und 27 auf, die sich über die gesamte Höhe des betreffenden Konstruktionsteils 7 erstrecken und eine zwischen diesen angeordnete Führungsnut 28 bilden, die insbesondere in Fig. 5 zu erkennen ist.

An dem gegenüberliegenden Zwischen-Konstruktionsteil 9 ist an der betreffenden Seite im unteren Bereich ein plattenförmiges Zentrierteil 29 (Fig.2 und 5) angeordnet, das beim Verfahren des beweglichen und des Zwischen-Konstruktionsteils 7 bzw. 9 durchgehend in die Führungsnut 28 eingreift. Das Zentrierteil 29 dient während des Zurückschwenkens der beiden Konstruktionsteile 7 und 9 beim Einfahren in die Führungsnut 28 als Führungsfinder und gleitet dann beim weiteren Zurückschwenken in der Führungsnut bis zu der in Fig. 1 dargestellten Position.

Oberhalb des Zentrierteils 29 ist an der betreffenden Seite des Zwischen-Konstruktionsteils 9 eine sich über die verbleibende Länge der Seite erstreckende Führungsfeder 30 angeordnet, die ebenfalls in die Führungsnut 28 eingreift. Die Führungsfeder 30 bildet an der betreffenden Seite eine Überlappung zum Verschließen des seitlichen Zwischenraums zwischen den Konstruktionsteilen 7 und 9.

Weiterhin ist an der Oberseite des Zwischen-Konstruktionsteils über der Führungsfeder 30 ein Überlappungsblech 31 vorgesehen, das die Oberseite der betreffenden Anschlußstelle zwischen den beiden Konstruktionsteilen 7 und 9 verschließt.

Auf der anderen Seite der Führungsrinnenkonstruktion, an der, wie in Fig. 5 gezeigt, der Mitnehmer 25 der Energieführungskette 1 in die Führungsrinne 2 eingreift, sind am Zwischen-Konstruktionsteil 9 trapez-förmige Schutzabdeckungen 32 und 33 vorgesehen, die einen nach unten weisenden Zwischenraum zum Durchgreifen des Mitnehmers 25 bilden.

Wie in den Fig. 1 und 5 gezeigt ist, sind an den beiden Enden des Zwischen-Konstruktionsteils 9 Flankenführungen 34 und 35 vorgesehen, die nach außen etwas gespreizt sind und außenseitig an den Enden der Rinnenstücke 11 und 13 des stationären und des beweglichen Konstruktionsteils 6 bzw. 7 zur Anlage kommen. Die Flankenführungungen 34 und 35 dienen zum genau fluchtenden Einfädeln der Konstruktionsteile 6, 7 und 9 in der Endphase des Zurückschwenkens.

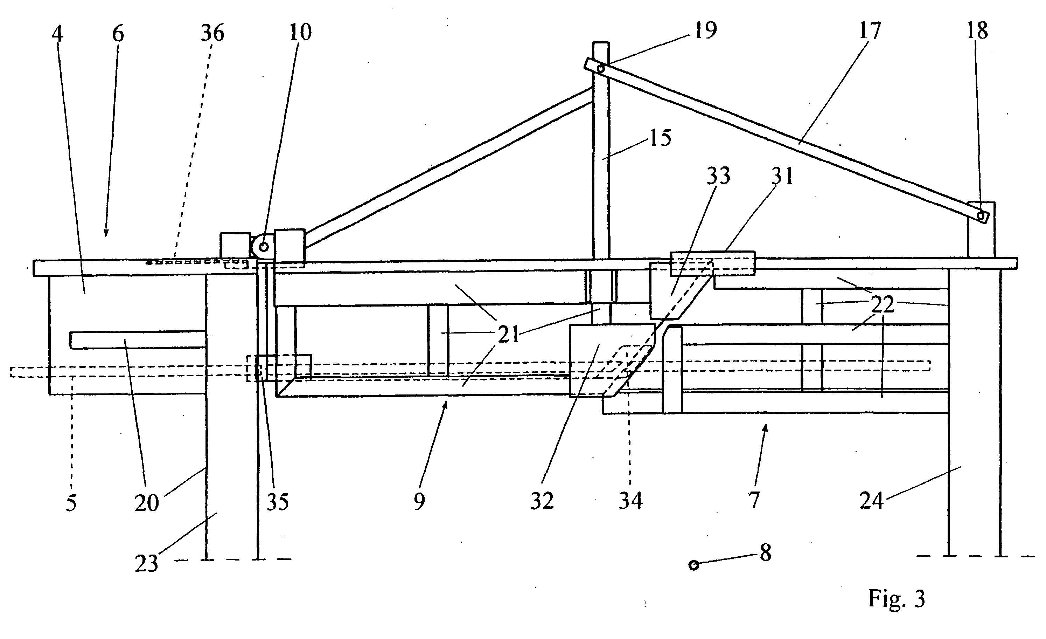

An der Oberseite des Zwischen-Konstruktionsteils 9 ist an dessen dem stationären Konstruktionsteil 6 gegenüberliegenden Ende eine Verschlußklappe 36 angeordnet, die in dem in den Fig. 1 und 3 gezeigten nicht-verschwenkten Zustand der Führungsrinnenkonstruktion horizontal verläuft und bei dem in den Fig. 2 und 4 gezeigten aufgeschwenkten Zustand der Führungsrinnenkonstruktion das Rinnenstück 11 des stationären Konstruktionsteils 6 verschließt.

### Bezugszeichenliste

- 1: Energieführungskette
- 2: Führungsrinne
- 3: Seitenteil
- 4: Seitenteil
- 5: Gleitschiene
- 6: stationäres Konstruktionsteil
- 7: beweglicher Konstruktionsteil
- 8: erste Drehachse
- 9: Zwischen-Konstruktionsteil
- 10: zweite Drehachse
- 11: Rinnenstück
- 12: Rinnenstück
- 13: Rinnenstück
- 14: Hebelarm
- 15: Hebelarm
- 16: Druckglied
- 17: Druckglied
- 18: Gelenkpunkt
- 19: Gelenkpunkt
- 20: Rahmen
- 21: Rahmen
- 22: Rahmen
- 23: Rahmenteil
- 24: Rahmenteil
- 25: Mitnehmer
- 26: Führungsleiste
- 27: Führungsleiste
- 28: Führungsnut
- 29: Zentrierteil
- 30: Führungsfeder
- 31: Überlappungsblech
- 32: Schutzabdeckung
- 33: Schutzabdeckung
- 34: Flankenführung
- 35: Flankenführung
- 36: Verschlußklappe

## Patentansprüche

1. Führungsrinnenkonstruktion, die an einer Unterkonstruktion befestigbar ist, mit einer Führungsrinne (2) aus langgestreckten parallelen Seitenteilen (3, 4), zwischen denen ein Gegenstand, insbesondere eine Energieführungskette (1) ablegbar und verfahrbar ist, **dadurch gekennzeichnet, daß** sie ein stationäres Konstruktionsteil (6) zur Befestigung an einem stationären Bereich der Unterkonstruktion, ein bewegliches Konstruktionsteil (7) zur Befestigung an einem um eine erste Drehachse (8) gegenüber dem stationären Bereich verschwenkbaren Bereich der Unterkonstruktion und ein zwischen dem stationären Konstruktionsteil (6) und dem beweglichen Konstruktionsteil (7) angeordnetes Zwischen-Konstruktionsteil (9) einschließt, das mit dem beweglichen Konstruktionsteil (7) um eine zur ersten Drehachse (8) parallele zweite Drehachse (10) verschwenkbar verbunden ist, wobei das stationäre, das bewegliche und das Zwischen-Konstruktionsteil (6, 7, 9) jeweils Rinnenstücke (11, 12, 13) aufweisen, die im nichtverschwenkten Zustand der Unterkonstruktion mit ihren Stirnseiten an den Innenseiten der Seitenteile (3, 4) fluchtend aneinanderliegen, die zweite Drehachse (10) für das Zwischen-Konstruktionsteil (9) an der in die Verschwenkrichtung weisenden Seite der Führungrinne (2) angeordnet ist und, in Abhängigkeit von der Lage der ersten Drehachse (8) für den verschwenkbaren Bereich der Unterkonstruktion, die gegenüberliegenden Stirnseiten der Rinnenstücke (12, 13) des beweglichen Konstruktionsteils (7) und des Zwischen-Konstruktionsteils (9) so in der Verschwenkrichtung geneigt angeordnet sind und die Verschwenkbewegung des Zwischen-Konstruktionsteils (9) mit der Bewegung des verschwenkbaren Bereichs der Unterkonstruktion und des beweglichen Konstruktionsteils (7) durch eine Steuereinrichtung so gekoppelt ist, daß beim Verschwenken dieses Bereichs der Unterkonstruktion sich der bewegliche Konstruktionsteil (7) und der Zwischen-Konstruktionsteil (9) aneinander vorbei bewegen.

2. Führungsrinnenkonstruktion nach Anspruch 1, **dadurch gekennzeichnet, daß** die Steuereinrichtung eine mechanische Kopplung aufweist.

3. Führungsrinnenkonstruktion nach Anspruch 2, **dadurch gekennzeichnet, daß** die erste und die zweite Drehachse (8, 10) horizontal zur Unterkonstruktion angeordnet sind.

4. Führungsrinnenkonstruktion nach Anspruch 2 oder 3, **dadurch gekennzeichnet, daß** die mechanische Kopplung einen am Zwischen-Konstruktionsteil (9) angeordneten Hebelarm (14, 15) und ein mit dem beweglichen Konstruktionsteil (7) gelenkig verbundenes und am Hebelarm (14, 15) gelenkig angreifendes Druckglied (16, 17) aufweist.

5. Führungsrinnenkonstruktion nach Anspruch 3 und 4, **dadurch gekennzeichnet, daß** der Hebelarm (14, 15) im Bereich des dem beweglichen Konstruktionsteil (7) gegenüberliegenden Endes des Zwischen-Konstruktionsteils (9) angeordnet ist und sich im wesentlichen senkrecht von diesem nach oben erstreckt und das Druckglied (16, 17) sich von einem an oder über der Oberseite des beweglichen Konstruktionsteils (7) angeordneten Gelenkpunkt (18) zu einem am freien Ende des Hebelarms (14, 15) angeordneten Gelenkpunkt (19) erstreckt, wobei das Druckglied (16, 17) seitlich außerhalb des Zwischen-Konstruktionsteils (9) und des Hebelarms (14, 15) verläuft.

6. Führungsrinnenkonstruktion nach Anspruch 5, **dadurch gekennzeichnet, daß** das Verhältnis zwischen der Länge des Hebelarms und dem Abstand zwischen dem Gelenkpunkt (18) des Druckglieds (16, 17) am beweglichen Konstruktionsteil (7) und dem Fußpunkt des Hebelarms (14, 15) zwischen 0,3 und 0,45 liegt.

7. Führungsrinnenkonstruktion nach einem der Ansprüche 1 bis 6, **dadurch gekennzeichnet, daß** das stationäre, das bewegliche und das Zwischen-Konstruktionsteil (6, 7, 9) einen die Kräfte zum Verschwenken des Zwischen-Konstruktionsteils (9) aufnehmenden, selbsttragenden Rahmen (20, 21, 22) für die darin angeordneten Rinnenstücke (11, 12, 13) aufweisen.

8. Führungsrinnenkonstruktion nach Anspruch 7, **dadurch gekennzeichnet, daß** der Rahmen (20, 21, 22) an seinen beiden Enden an der Unterkonstruktion befestigbar ist und Schnittstellen mit sich daran anschließenden am stationären bzw. verschwenkbaren Bereich der Unterkonstruktion angeordneten Führungsrinnenteilen bildet.

9. Führungsrinnenkonstruktion nach einem der Ansprüche 1 bis 8, **dadurch gekennzeichnet, daß** an den gegenüberliegenden Stirnseiten des beweglichen und des Zwischen-Konstruktionsteils (7, 9) eine Einrichtung zum genau fluchtenden Ausrichten der Enden der betreffenden Rinnenstücke (11, 12, 13) vorgesehen ist.

10. Führungsrinnenkonstruktion nach Anspruch 9, **dadurch gekennzeichnet, daß** die Einrichtung eine seitlich an einem Konstruktionsteil (7) in dessen Verschwenkrichtung ausgebildete und sich über diese Seite erstreckende Führungsnut (28) und ein in diese, beim gegenseitigen Verfahren über im wesentlichen deren gesamte Länge eingreifendes, am anderen Konstruktionsteil (9) angeordnetes Zentrierteil (29) aufweist.

11. Führungsrinnenkonstruktion nach einem der Ansprüche 1 bis 10, **dadurch gekennzeichnet, daß** an den gegenüberliegenden Enden des stationären, des beweglichen und des Zwischen-Konstruktionsteils (9) seitliche Überlappungsteile zum Verschließen von Zwischenräumen zwischen den Konstruktionsteilen (7, 9) angeordnet sind.

12. Führungsrinnenkonstruktion nach einem der Ansprüche 1 bis 11, **dadurch gekennzeichnet, daß** an dem dem stationären Konstruktionsteil (6) gegenüberliegenden Ende des Zwischen-Konstruktionsteils (9) eine Verschlußklappe (36) angeordnet ist, die bei aufgeschwenktem Zwischen-Konstruktionsteil (9) das Rinnenstück (11) des stationären Konstruktionsteils (6) verschließt.

## Claims

1. Guide channel structure which can be fastened to a substructure, with a guide channel (2) composed of long, parallel side elements (3, 4) , between which an object, particularly an energy transmission chain (1) can be laid and moved, **characterized in that** it consists of a stationary structural element (6) for fastening on a stationary section of the substructure, a movable structural element (7) for fastening on an section of the substructure which can be pivoted about a first axis of rotation (8) in relation to the stationary section, and an intermediate structural element (9) located between the stationary structural element (6) and the movable structural element (7), which is connected to the movable structural element (7) in a manner permitting pivoting about a second axis of rotation (10) parallel to the first axis of rotation (8), where the stationary, movable and intermediate structural elements (6, 7, 9) each display channel sections (11, 12, 13) whose face ends lie flush against each other on the inner sides of the side elements (3, 4) when the substructure is not pivoted, the second axis of rotation (10) for the intermediate structural element (9) is located on the side of the guide channel (2) pointing in the direction of pivoting and, depending on the position of the first axis of rotation (8) for the pivotable section of the substructure, the opposite face ends of the channel sections (12, 13) of the movable structural element (7) and of the intermediate structural element (9) are located at an angle in the direction of pivoting arid the pivoting motion of the intermediate structural element (9) is coupled to the movement of the pivotable section of the substructure and of the movable structural element (7) by means of a control device in such a way that, when pivoting this section of the substructure, the movable structural element (7) and the intermediate structural element (9) move past each other.

2. Guide channel structure according to Claim 1,
**characterized in that** the control device displays a mechanical coupling.

3. Guide channel structure according to Claim 2,
**characterized in that** the first and second axes of rotation (8, 10) are positioned horizontal to the substructure.

4. Guide channel structure according to Claim 2 or 3, **characterized in that** the mechanical coupling displays a lever arm (14, 15) located on the intermediate structural element (9) and a thrust element (16, 17) which is articulated to the movable structural element (7) and acts on the lever arm (14, 15) in articulated fashion.

5. Guide channel structure according to Claims 3 and 4, **characterized in that** the lever arm (14, 15) is located in the region of the end of the intermediate structural element (9) opposite the movable structural element (7) and essentially extends vertically upwards from this point, and the thrust element (16, 17) extends from a pivot point (18) located on or above the upper side of the movable structural element (7) to a pivot point (19) located at the free end of the lever arm (14, 15), where the thrust element (16, 17) runs laterally outside the intermediate structural element (9) and the lever arm (14, 15).

6. Guide channel structure according to claim 5,
**characterized in that** the ratio between the length of the lever arm and the distance between the. pivot point (18) of the thrust element (16, 17) on the movable structural element (7) and-the foot of the lever arm (14, 15) is between 0.3 and 0.45.

7. Guide channel structure according to one of the Claims 1 to 6, **characterized in that** the stationary, movable and intermediate structural elements (6, 7, 9) have a self-supporting frame (20, 21, 22) for the channel sections (11, 12 ,13) located therein which absorbs the forces for pivoting the intermediate structural element (9).

8. Guide channel structure according to Claim 7,
**characterized in that** the two ends of the frame (20, 21, 22) are fastened to the substructure and form interfaces to the adjacent guide channel sections located on the stationary and pivotable sections of the substructure.

9. Guide channel structure according to one of the Claims 1 to 8, **characterized in that** a device for precise, flush alignment of the ends of the relevant channel sections (11, 12, 13) is provided at the opposite face ends of the movable and intermediate structural elements (7, 9).

10. Guide channel structure according to Claim 9, **characterized in that** the device displays a guide groove (28) provided on the side of one structural element (7), running in its direction of pivoting and extending over this side, and a centring element (29) located on the other structural element (9), which essentially engages this guide groove (28) over its entire length when the elements are moved in relation to each other.

11. Guide channel structure according to one of the Claims 1 to 10, **characterized in that** lateral overlapping elements are provided on the opposite ends of the stationary, movable and intermediate structural elements (9) in order to close any gaps between the structural elements (7, 9).

12. Guide channel structure according to one of the Claims 1 to 11, **characterized in that** the end of the intermediate structural element (9) opposite to the stationary structural element (6) is provided with a flap (36), which closes off the channel section (11) of the stationary structural element (6) when the intermediate structural element (9) is pivoted up.

## Revendications

1. Structure de canal de guidage, susceptible d'être fixée sur une construction inférieure, comportant un canal de guidage (2) constitué par des parties latérales allongées parallèles (3, 4) entre lesquelles peut venir se poser et se déplacer un objet, en particulier une chaîne d'alimentation en énergie (1), **caractérisée en ce qu'**elle comprend une partie de structure stationnaire (6) pour la fixation sur une zone stationnaire de la construction inférieure, une partie de structure mobile (7) pour la fixation sur une zone de la construction inférieure en basculement par rapport à la zone stationnaire autour d'un premier axe de rotation (8), et une partie de structure intermédiaire (9) agencée entre la partie de structure stationnaire (6) et la partie de structure mobile (7), partie intermédiaire qui est reliée à la partie de structure mobile (7) de manière à pouvoir basculer autour d'un second axe de rotation (10) parallèle au premier axe de rotation (8), dans laquelle les parties de structure stationnaire, mobile et intermédiaire (6, 7, 9) comprennent chacune des tronçons de canal (11, 12, 13) qui, dans l'état non basculé de la construction inférieure, s'appuient par leurs faces frontales en alignement contre les faces intérieures des parties latérales (3, 4), le second axe de rotation (10) pour la partie de structure intermédiaire (9) est agencé sur le côté du canal de guidage (2) dirigé en direction de basculement, et dans laquelle, en fonction de la position du premier axe de rotation (8) pour la zone en basculement de la construction inférieure, les faces frontales opposées des tronçons de canal (12, 13) de la partie de structure mobile (7) et de la partie de structure intermédiaire (9) sont agencées de façon inclinée en direction de basculement de telle sorte que, et le mouvement de basculement de la partie de structure intermédiaire (9) est couplé de telle sorte au mouvement de la zone en basculement de la construction inférieure et de la partie de structure mobile (7) par un dispositif de commande, que lors du basculement de cette zone de la construction inférieure la partie de structure mobile (7) et la partie de structure intermédiaire (9) se déplacent en passant l'une devant l'autre.

2. Structure de canal de guidage selon la revendication 1, **caractérisée en ce que** le dispositif de commande comprend un accouplement mécanique.

3. Structure de canal de guidage selon la revendication 2, **caractérisée en ce que** le premier et le second axe de rotation (9, 10) sont agencés horizontalement par rapport à la construction inférieure.

4. Structure de canal de guidage selon l'une ou l'autre des revendications 2 et 3, **caractérisée en ce que** l'accouplement mécanique comprend un bras de levier (14, 15) agencé sur la partie de structure intermédiaire (9), et un organe de compression (16, 17) relié en articulation à la partie de structure mobile (7) et attaquant en articulation le bras de levier (14, 15).

5. Structure de canal de guidage selon les revendications 3 et 4, **caractérisée en ce que** le bras de levier (14, 15) est agencé dans la zone de l'extrémité, opposée à la partie de structure mobile (7), de la partie de structure intermédiaire (9) et s'étend sensiblement verticalement depuis celle-ci vers le haut, et **en ce que** l'organe de compression (16, 17) s'étend depuis un point d'articulation (18) agencé sur ou au-dessus de la face supérieure de la partie de structure mobile (7) jusqu'à un point d'articulation (19) agencé à l'extrémité libre du bras de levier (14, 15), l'organe de compression (16, 17) s'étendant latéralement à l'extérieur de la partie de structure intermédiaire (9) et du bras de levier (14, 15).

6. Structure de canal de guidage selon la revendication 5, **caractérisée en ce que** le rapport entre la longueur du bras de levier et la distance entre le point d'articulation (18) de l'organe de compression (16, 17) sur la partie de structure mobile (7) et le point de pied du bras de levier (14, 15) est compris entre 0,3 et 0,45.

7. Structure de canal de guidage selon l'une quelconque des revendications 1 à 6, **caractérisée en ce que** les parties de structure stationnaire, mobile et intermédiaire (6, 7, 9) comprennent un cadre autoporteur (20, 21, 22), pour les tronçons de canal (11, 12, 13) agencés dans celui-ci, qui encaisse les forces destinées à basculer la partie de structure intermédiaire (9).

8. Structure de canal de guidage selon la revendication 7, **caractérisée en ce que** le cadre (20, 21, 22) peut être fixé à ses deux extrémités sur la construction inférieure et forme des interfaces avec les tronçons de canal de guidage qui s'y raccordent agencés sur la zone stationnaire et sur la zone basculante de la construction inférieure.

9. Structure de canal de guidage selon l'une quelconque des revendications 1 à 8, **caractérisée en ce qu'**il est prévu sur les faces frontales opposées des parties de structure mobile et intermédiaire (7, 9), un dispositif pour orienter en alignement exact les extrémités des tronçons de canal concernés (11, 12, 13).

10. Structure de canal de guidage selon la revendication 9, **caractérisée en ce que** le dispositif comprend une gorge de guidage (28) ménagée latéralement sur une partie de structure (7) dans sa direction de basculement et s'étendant sur ce côté, et une portion de centrage (29) agencée sur l'autre partie de structure (9) et s'engageant dans ladite gorge lors du déplacement mutuel sur sensiblement la totalité de sa longueur.

11. Structure de canal de guidage selon l'une quelconque des revendications 1 à 10, **caractérisée en ce qu'**aux extrémités opposées des parties de structure stationnaire, mobile et intermédiaire (9) sont prévues des portions de chevauchement latérales pour refermer des intervalles entre les parties de structure (7, 9).

12. Structure de canal de guidage selon l'une quelconque des revendications 1 à 11, **caractérisée en ce qu'**à l'extrémité, opposée à la partie de structure stationnaire (6), de la partie de structure intermédiaire (9) est agencé un volet d'obturation (36) qui, dans l'état basculé vers le haut de la partie de structure intermédiaire (9), referme le tronçon de canal (11) de la partie de structure stationnaire (6).
